# EUROPEAN PATENT APPLICATION

(11) **EP 1 411 440 A2**
(43) Date of publication of application: **21.04.2004**
(21) Application number: 03103620.5
(22) Date of filing: 30.09.2003
(51) Int. Cl.: G06F 13/40

(54) **VME multi-service platform system and method**

(30) Priority: 16.10.2002 US 272659
(71) Applicant: Motorola Inc., Schaumburg, IL 60196 (US)
(72) Inventor: Wong, Henry, Tempe, AZ 85283 (US); German, Mark S, Chandler, AZ 85224 (US); Steffernsen, Nils P, Tempe, AZ 85282 (US)
(74) Representative: Gibson, Sarah Jane

(57) **Abstract**

A VME multi-service platform system (100) includes a payload module (106) coupled to operate within a VME multi-service platform system chassis (202) having a VMEbus network (102) and a switched fabric network (104) that operate concurrently and includes the payload module having a first switched fabric connector (210) in a P0 mechanical envelope (218) and a payload module keying mechanism (222) in the P0 mechanical envelope of the payload module that uniquely corresponds to a first switched fabric network standard.

## Description

### Background of the Invention

In current embedded computer platforms, such as VERSAmodule Eurocard (VMEbus) systems, the shared multi-drop bus can only be used to support one simultaneous communication between payload modules in the network. However, some applications have requirements for simultaneous high bandwidth transfers between payload cards in the VMEbus system that cannot be handled by the shared multi-drop architecture of VMEbus. It is desirable to configure current VMEbus systems to accommodate high-speed data transfers while maintaining the existing VMEbus network architecture. Since numerous high-speed data standards are available, it is also desirable to ensure that payload boards designed for one high-speed standard and connector type are not improperly interfaced with a computer system using a different high-speed standard or with a computer system using a different type of high speed connector.

Accordingly, there is a significant need for an apparatus and method that overcomes the deficiencies of the prior art outlined above.

### Brief Description of the Drawings

Referring to the drawing:
FIG.1 depicts a multi-service platform system according to one embodiment of the invention;
FIG.2 depicts a multi-service platform system according to an embodiment of the invention;
FIG.3 depicts a switched fabric network configuration according to an embodiment of the invention;
FIG.4 depicts a switched fabric network configuration according to another embodiment of the invention; and
FIG.5 depicts an isometric of keying mechanisms according to an embodiment of the invention.

It will be appreciated that for simplicity and clarity of illustration, elements shown in the drawing have not necessarily been drawn to scale. For example, the dimensions of some of the elements are exaggerated relative to each other. Further, where considered appropriate, reference numerals have been repeated among the Figures to indicate corresponding elements.

### Description of the Preferred Embodiments

In the following detailed description of exemplary embodiments of the invention, reference is made to the accompanying drawings, which illustrate specific exemplary embodiments in which the invention may be practiced. These embodiments are described in sufficient detail to enable those skilled in the art to practice the invention, but other embodiments may be utilized and logical, mechanical, electrical and other changes may be made without departing from the scope of the present invention. The following detailed description is, therefore, not to be taken in a limiting sense, and the scope of the present invention is defined only by the appended claims.

In the following description, numerous specific details are set forth to provide a thorough understanding of the invention. However, it is understood that the invention may be practiced without these specific details. In other instances, well-known circuits, structures and techniques have not been shown in detail in order not to obscure the invention.

In the following description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact. However, "coupled" may mean that two or more elements are not in direct contact with each other, but yet still co-operate or interact with each other.

For clarity of explanation, the embodiments of the present invention are presented, in part, as comprising individual functional blocks. The functions represented by these blocks may be provided through the use of either shared or dedicated hardware, including, but not limited to, hardware capable of executing software. The present invention is not limited to implementation by any particular set of elements, and the description herein is merely representational of one embodiment.

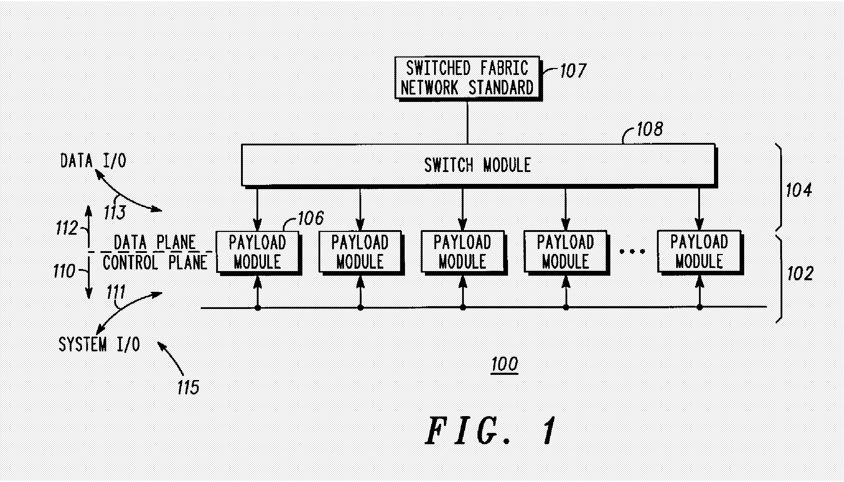

FIG.1 depicts a multi-service platform system 100 according to one embodiment of the invention. As shown in FIG.1, multi-service platform system 100 can comprise a VERSAmodule Eurocard (VMEbus) network 102 and a switched fabric network 104 coupled to any number of payload modules 106. In other words, in an embodiment, multi-service platform system 100 can be a VME multi-service platform system having a switched fabric network 104. Payload module 106 can add functionality to multi-service platform system 100 through the addition of processors, memory, storage devices, I/O elements, and the like. In other words, payload module 106 can include any combination of processors, memory, storage devices, I/O elements, and the like, to give multi-service platform the functionality desired by a user.

Multi-service platform system 100 can be controlled by a platform controller (not shown for clarity), which can include a processor for processing algorithms stored in memory. Memory comprises control algorithms, and can include, but is not limited to, random access memory (RAM), read only memory (ROM), flash memory, electrically erasable programmable ROM (EEPROM), and the like. Memory can contain stored instructions, tables, data, and the like, to be utilized by processor. Platform controller can be contained in one, or distributed among two or more payload modules 106 with communication among the various payload modules of multi-service platform system 100 occurring via VMEbus network 102 or switched fabric network 104. Platform controller can also be contained on switch module 108. Platform controller can control the functionality of multi-service platform system 100 including managing any payload modules 106 placed in the slots of a chassis to add functionality to the multi-service platform system 100.

VMEbus network 102 is a parallel multi-drop bus network that is known in the art. VMEbus network 102 is defined in the ANSI/VITA 1-1994 and ANSI/VITA 1.1-1997 standards, promulgated by the VMEbus International Trade Association (VITA), P.O. Box 19658, Fountain Hills, Arizona, 85269 (where ANSI stands for American National Standards Institute). In an embodiment of the invention, VMEbus network 102 can include VMEbus based protocols such as Single Cycle Transfer protocol (SCT), Block Transfer protocol (BLT), Multiplexed Block Transfer protocol (MBLT), Two Edge VMEbus protocol (2eVME) and Two Edge Source Synchronous Transfer protocol (2eSST). VMEbus network 102 is not limited to the use of these VMEbus based protocols and other VMEbus based protocols are within the scope of the invention.

Switched fabric network 104 uses switch module 108 as a central switching hub with any number of payload modules 106 coupled to switch module 108. In an embodiment, switched fabric network 104 can be based on a point-to-point, switched input/output (I/O) fabric, whereby cascaded switch devices interconnect end node devices. Switched fabric network 104 can include both module-to-module (for example computer systems that support I/O module add-in slots) and chassis-to-chassis environments (for example interconnecting computers, external storage systems, external Local Area Network (LAN) and Wide Area Network (WAN) access devices in a data-center environment). Switched fabric network 104 can be implemented by using one or more of a plurality of switched fabric network standards 107, for example and without limitation, InfiniBand™, Serial RapidIO™, FibreChannel™, Ethernet™, PCI Express™, Hypertransport™, and the like. Switched fabric network 104 is not limited to the use of these switched fabric network standards and the use of any switched fabric network standard is within the scope of the invention.

In an embodiment of the invention, VMEbus network 102 and switched fabric network 104 operate concurrently within multi-service platform system 100. In one embodiment, switched fabric network 104 can operate in parallel with VMEbus network 102 in a multi-service platform system 100 that is defined by the ANSI/VITA 1-1994 and ANSI/VITA 1.1-1997 standards. In an example of an embodiment, VMEbus network 102 can operate as a control plane 110 by synchronizing and organizing activities in multi-service platform system 100. This is represented in FIG.1 by the control plane 110 sending and receiving system I/O 115. Switched fabric network 104 can operate as a data plane 112 by transferring data between individual payload modules 106. This is represented in FIG.I by the data plane 112 sending and receiving data I/O 113. In this embodiment, data is transferred faster through the higher bandwidth switched fabric network 104, while the VMEbus network 102 controls and manages the overall system. This has the effect of increasing the speed of multi-service platform system 100 that is based on VMEbus specifications since data transfers that are in excess of VMEbus network 102 bandwidth can take place using switched fabric network 104.

In another embodiment of the invention, VMEbus network 102 can be used as the data plane 112 and switched fabric network 104 can be used as the control plane 110. In yet another embodiment of the invention, VMEbus network 102 and switched fabric network 104 each can operate as both the control plane 110 and the data plane 112.

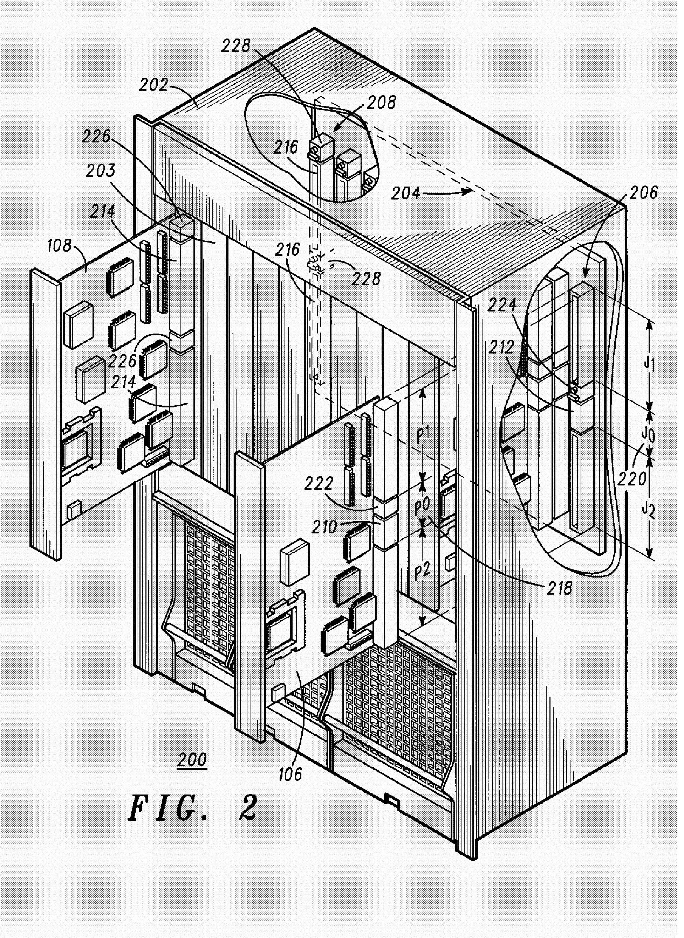

FIG.2 depicts a multi-service platform system 200 according to an embodiment of the invention. As shown in FIG.2, multi-service platform system 200 can include a multi-service platform system chassis 202, with software and any number of slots 203 for inserting modules. In an embodiment, multi-service platform chassis can be a VME multi-service platform chassis. In one embodiment a backplane 204 is used for connecting modules placed in slots 203. As an example of an embodiment, a multi-service platform system 200 can include, for example and without limitation, model MVME5100 manufactured by Motorola Computer Group, 2900 South Diablo Way, Tempe, AZ 85282. The invention is not limited to this model or manufacturer and any multi-service platform system is included within the scope of the invention.

Backplane 204 includes a first slot 206, which is designed to receive payload module 106. In an embodiment of the invention, backplane 204 and payload module 106 have a set of interlocking connectors designed to interlock with each other when payload module 106 is placed in first slot 206. The mechanical and electrical specifications for a portion of these interlocking connectors can be found in the ANSI/VITA 1-1994 and ANSI/VITA 1.1-1997 standards for VMEbus systems. For example, these standards define the mechanical envelope shown as P0, P1 and P2 on payload module, and corresponding mechanical envelopes J0, J1 and J2 on backplane 204 such that connectors in the P1/J1 and P2/J2 mechanical envelopes interlock when payload module 106 is placed in first slot 206 of multi-service platform system chassis 202. For example, payload module 106 has one portion of an interlocking connector in the in the P1 mechanical envelope designed to interlock with its corresponding portion located in the J1 mechanical envelope on the backplane 204 of first slot 206. Also, payload module 106 can have an interlocking connector in the P2 mechanical envelope designed to interlock with its corresponding portion located in the J2 mechanical envelope on the backplane 204 of first slot 206.

In an embodiment of the invention, connectors in the P1/J1 and P2/J2 mechanical envelopes are for VMEbus network 102, while the P0/J0 mechanical envelope is open. When payload module 106 is placed in first slot 206 and coupled to backplane 204 via connectors in the P1/J1 and P2/J2 mechanical envelopes, the functionality of payload module 106 is added to multi-service platform system 200 via VMEbus network 102. For example, processors, memory, storage devices, I/O elements, and the like, on payload module 106 are accessible by other payload modules and visa versa.

In an embodiment of the invention, payload module 106 has first switched fabric connector 210 in the P0 mechanical envelope 218. Backplane 204 includes corresponding first switched fabric connector 212 in the J0 mechanical envelope 220, where first switched fabric connector 210 and corresponding first switched fabric connector 212 are coupled to interface and interlock when payload module 106 is inserted into first slot 206. First switched fabric connector 210 and corresponding first switched fabric connector 212 are coupled for use in high-speed switched fabric networks and are compatible with any of a plurality of switched fabric network standards 107 such as InfiniBand, Serial RapidIO, FibreChannel, Ethernet, PCI Express, Hypertransport, and the like. In an example of an embodiment of the invention, first switched fabric connector 210 and corresponding first switched fabric connector 212 can be a Tyco MultiGig RT-3 connector manufactured by the AMP division of Tyco Electronics, Harrisburg, Pennsylvania. The invention is not limited to the use of the Tyco RT-3 connector, and any connector capable of handling data using any of the plurality of switched fabric network standards 107 is encompassed within the invention.

In an embodiment of the invention, payload module 106 can include a payload module keying mechanism 222 in the P0 mechanical envelope 218 that uniquely corresponds to one of the plurality of switched fabric network standards 107. Also, backplane 204 can include a corresponding payload module keying mechanism 224 in the J0 mechanical envelope 220 that uniquely corresponds to one of the plurality of switched fabric network standards 107. In an embodiment, one of the plurality of switched fabric network standards 107 can be a first switched fabric network standard. Payload module keying mechanism 222 and corresponding payload module keying mechanism 224 are coupled to interconnect when both correspond to the same one of the plurality of switched fabric network standards 107. In other words, payload module keying mechanism 222 and corresponding payload module keying mechanism 224 interconnect only when both correspond to a first switched fabric network standard. Corresponding payload module keying mechanism 224 is designed to preclude coupling of an incompatible payload module to the backplane in first slot 206. An incompatible payload module has payload module keying mechanism 222 that does not interface with corresponding payload module keying mechanism 224. This can occur, for example and without limitation, because each of the keying mechanisms does not correspond to the same one of the plurality of switched fabric network standards (i.e. does not correspond to a first switched fabric network standard).

In an embodiment of the invention, multi-service platform system 200 includes switch module 108 and second slot 208, where second slot 208 and backplane 204 are designed to receive switch module 108. Switch module 108 can have second switched fabric connector 214 and backplane 204 can include corresponding second switched fabric connector 216, where second switched fabric connector 214 and corresponding second switched fabric connector 216 are coupled to interface when switch module 108 is inserted into second slot 208. Second switched fabric connector 214 and corresponding second switched fabric connector 216 operate to couple switch module to plurality of payload modules 106 through backplane 204. Second switched fabric connector 214 and corresponding second switched fabric connector 216 are coupled for use in high-speed switched fabric networks and are compatible with any of a plurality of switched fabric network standards107 such as InfiniBand, Serial RapidIO, FibreChannel, Ethernet, PCI Express, Hypertransport, and the like.

When switch module 108 is inserted in second slot 208, switch module 108 is coupled to payload module 106 via corresponding first switched fabric connector 212 through backplane as shown in FIG.1. Switch module 108 can also be coupled to plurality of payload modules 106 as shown in FIG.1 via backplane through each respective corresponding first switched fabric connector. In an embodiment, when switch module 108 is coupled to backplane 204, payload module 106 and switch module 108 can communicate using switched fabric network 104 via first switched fabric connector 210.

In an embodiment of the invention, switch module 108 can include a switch module keying mechanism 226 that uniquely corresponds to one of the plurality of switched fabric network standards 107. Also, backplane 204 can include a corresponding switch module keying mechanism 228 that uniquely corresponds to one of the plurality of switched fabric network standards 107. Switch module keying mechanism 226 and corresponding switch module keying mechanism 228 are coupled to interconnect when both correspond to the same one of the plurality of switched fabric network standards 107. In other words, switch module keying mechanism 226 and corresponding switch module keying mechanism 228 interconnect only with both correspond to a first switched fabric network standard. Corresponding switch module keying mechanism 228 is coupled to preclude coupling of an incompatible switch module to the backplane in second slot 208. An incompatible switch module has switch module keying mechanism 226 that does not interface with corresponding switch module keying mechanism 228. This can occur, for example and without limitation, because each of the keying mechanisms corresponds to a different one of the plurality of switched fabric network standards. FIG. 2 shows two each of switch module keying mechanism 226 and corresponding switch module keying mechanism 228. However, fewer than two or more than two switch module keying mechanisms 226 and corresponding switch module keying mechanisms 228 are included within the scope of the invention.

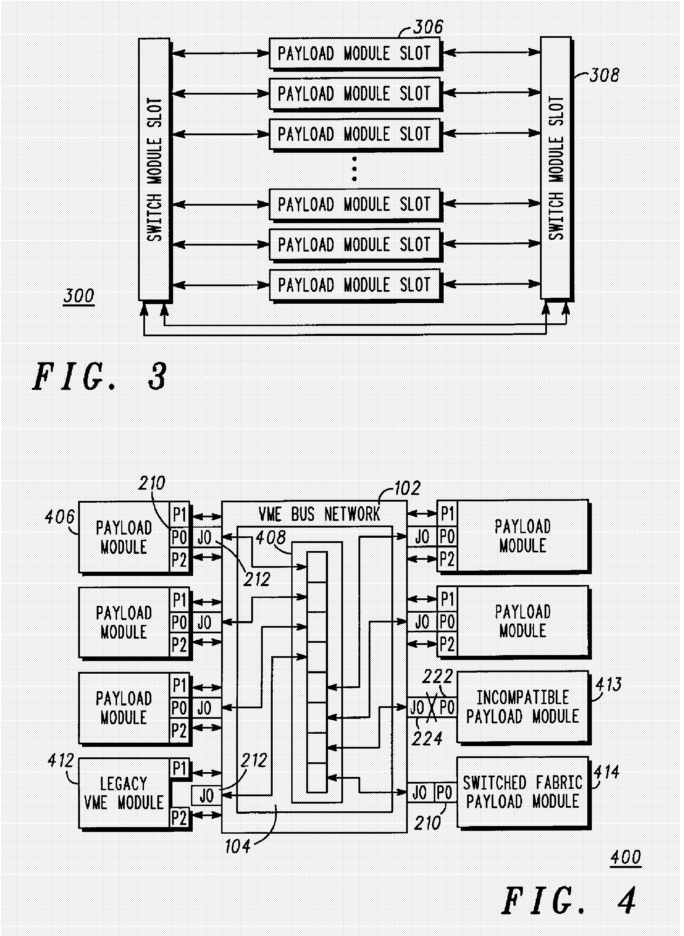

FIG.3 depicts a switched fabric network configuration 300 according to an embodiment of the invention. As shown in FIG.3, payload module slots 306 and switch module slots 308 can be configured in a redundant dual-star configuration, where each payload module slot 306 is coupled to two separate switch module slots 308. This allows for redundancy in multi-service platform system 100, 200 by allowing payload modules 106 inserted in payload module slots 306 to use either switch module 108 inserted in switch module slot 308 to access multi-service platform system 100, 200, or other payload modules 106 within multi-service platform system 100, 200. Also, switch modules 108 can communicate with each other over switched fabric network 104 as represented by the arrows connecting each switch module slot 308.

FIG.4 depicts a switched fabric network configuration 400 according to another embodiment of the invention. As shown in FIG.4, switch module 408 can be coupled to payload modules 406, legacy VME modules 412 and switched fabric payload modules 414. As described above, connectors in the P1 and P2 mechanical envelope on payload modules 106 are coupled to VMEbus network 102. In an embodiment of the invention, first switched fabric connector 210 in the P0 mechanical envelope is coupled to switch module 408. Although the switched fabric network configuration 400 shown in FIG.4 depicts eight payload modules coupled to switch module 108, any number of payload modules coupled to switch module is within the scope of the invention.

In an embodiment of the invention, legacy VME module 412 can be coupled to VMEbus network 102 even with the presence of corresponding first switched fabric connector 212 on the backplane 204 of a particular slot. Legacy VME module 412 can be a payload module without a first switched fabric connector 210 in the P0 mechanical envelope 218. In another embodiment, legacy VME module 412 can be a payload module that has a connector in the P0 mechanical envelope 218 that does not mechanically interfere with corresponding first switched fabric connector 212 on backplane. In this manner, legacy VME modules 412 can still be used in multi-service platform system 100, 200 having both VMEbus network 102 and switched fabric network 104.

In another embodiment, switched fabric payload module 414 can couple to switch module 408, where switched fabric payload module 414 only has first switched fabric connector 210 and couples solely to switched fabric network 104. In this embodiment, switched fabric payload module 414 is not coupled to VMEbus network 102 and transfers data solely using switched fabric network 104.

In still another embodiment, corresponding payload module keying mechanism 224 is designed to preclude coupling of an incompatible payload module 413 to the backplane. An incompatible payload module 413 can include a payload module that has payload module keying mechanism 222 and corresponding payload module keying mechanism 224 that do not correspond to the same one of the plurality of switched fabric network standards, as represented by the "X" through the P0/J0 interface of the incompatible payload module 413. In another embodiment, an incompatible switch module is precluded from coupling to the backplane in an analogous manner through the use of keying mechanisms and connector placement. In other embodiments, incompatible payload module 413 can include a payload module that has payload module keying mechanism 222 and corresponding payload module keying mechanism 224 that do not correspond to the same one of a first switched fabric network standard, a first physical type of the switched fabric connector, a first physical location of the payload module keying mechanism (on the incompatible payload module) and the corresponding payload module keying mechanism, a first user I/O, a first interconnect topology (i.e. fabric topology such as star, dual star, mesh, and the like), and a first operating power means (i.e. voltage, current, and the like of the chassis does not correspond to the design operating power means of the incompatible payload module), and the like.

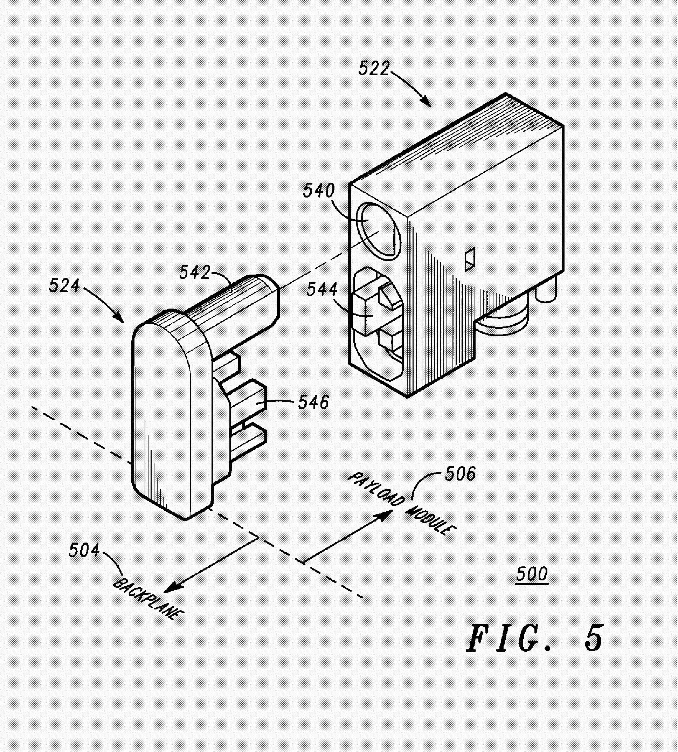

FIG.5 depicts an isometric 500 of keying mechanisms according to an embodiment of the invention. As shown in FIG.5, keying mechanisms for payload module can include payload module keying mechanism 522 located on payload module 506, and corresponding payload module keying mechanism 524 located on backplane 504. Payload module keying mechanism 522 and corresponding payload module keying mechanism 524 ensure that any connectors located in the P0 mechanical envelope 218 on payload module 506 cannot interconnect with incompatible connectors located in the J0 mechanical envelope 220 on backplane 504. Incompatibility can occur due to type of connector, position of connector within P0 mechanical envelope 218 or J0 mechanical envelope 220, electrical incompatibility of connectors, switched fabric network standard incompatibility, physical location of connectors, interconnect topologies, operating power means, and the like.

In an embodiment of the invention, payload module keying mechanism 522 and corresponding payload module keying mechanism 524 can have two features that must correspond to each other before connectors are allowed to interconnect. First, payload module keying mechanism 522 includes an alignment portion 540 uniquely corresponding to any of a first physical type of first switched fabric connector 210, a first physical location of the payload module keying mechanism and the corresponding payload module keying mechanism, a first user I/O, a first interconnect topology, or a first operating power means, and the like. Also, corresponding payload module keying mechanism 524 includes corresponding alignment portion 542 uniquely corresponding to any of a first physical type of first switched fabric connector 210, a first physical location of the payload module keying mechanism and the corresponding payload module keying mechanism, a first user I/O, a first interconnect topology, or a first operating power means, and the like. First physical type of first switched fabric connector 210 can include an electrical type of connector, optical type of connector, and the like. In an embodiment, alignment portion 540 and corresponding alignment portion 542 must both correspond to at least one of the same physical type of connector (i.e. electrical, optical, and the like), physical location of the payload module keying mechanism and the corresponding payload module keying mechanism, a user I/O, interconnect topology, or operating power means, and the like in order to interface. This has the advantage of protecting both the payload module and the computer system from having a payload module 506 that is not configured for a certain physical type of connector, from being inserted and connected to multi-service platform system 100, 200.

As an example of an embodiment, corresponding alignment portion 542 can be cylindrically shaped, with a portion of the curved cylindrical surface flattened. Depending on the amount of flattened surface and the angle of the flattened surface relative to the orientation of the backplane, corresponding alignment portion 542 can be uniquely disposed to correspond to one of a plurality of physical type of connectors, for example a first physical type of connector. As an example, the angle of flattened surface can be 0 degrees and correspond to an electrical type of connector of a VXS VME Switched Serial Standard payload as defined in VITA 41.0-200x. Alignment portion 540 of payload module keying mechanism 522 can then be coupled to interface with corresponding alignment portion 542 by fashioning alignment portion 540 as a cylindrically shaped receptacle with a flattened portion coupled to receive only a corresponding alignment portion 542, wherein both alignment portion 540 and corresponding alignment portion 542 both correspond a first physical type of first switched fabric connector 210.

The second feature of payload module keying mechanism 522 includes a coding key portion 544 uniquely corresponding to first switched fabric network standard. Also, corresponding payload module keying mechanism 524 includes corresponding coding key portion 546 that uniquely corresponds to first switched fabric network standard. In an embodiment, coding key portion 544 and corresponding coding key portion 546 must both correspond to the same switched fabric network standard (i.e. first switched fabric network standard), in order to interface. This has the advantage of protecting both the payload module and the computer system from having a payload module that is not configured for a certain switched fabric network standard from being inserted and connected to multi-service platform system 100, 200.

As an example of an embodiment, coding key portion 544 and corresponding coding key portion 546 can have any number of unique pins and receptacles designed to interface only when both coding key portion 544 and corresponding coding key portion 546 correspond to first switched fabric network standard. For example, coding key portion 544 and corresponding coding key portion 546 can have unique positions and colors as defined by International Electrotechnical Commission (IEC) 61076-4-101. Coding key portion 544 and corresponding coding key portion 546 are not limited to IEC 61076-4-101, and any other key coding system is within the scope of the invention. As an example of an embodiment, Infiniband 4X can be associated with IEC 61076-4-101 1567 (Brilliant Blue Ral # 5007) and IEC 61076-4-101 2348 (Brilliant Blue Ral # 5007).

In an embodiment of the invention, alignment portion 540 and corresponding alignment portion 542 must successfully interface before coding key portion 544 and corresponding coding key portion 546 are allowed to interface. Also, coding key portion 544 and corresponding coding key portion 546 must successfully interface before first switched fabric connector 210 and corresponding first switched fabric connector are allowed to interface. This has the advantage of minimizing any potential for interfacing a payload module having a configuration that is incompatible with multi-service platform system 100 (i.e. incompatible physical types of switched fabric connectors, and/or incompatible switched fabric networks standards). In an embodiment of the invention, switch module keying mechanism 226 and corresponding switch module keying mechanism 228 can be configured analogously to payload module keying mechanism 522 and corresponding payload module keying mechanism 524 described above.

One advantage of an embodiment of the invention over the prior art is that payload module keying mechanism and corresponding payload module keying mechanism are field replaceable. This means that the alignment portion (and corresponding alignment portion), and coding key portion (and corresponding coding key portion) can be removed, upgraded, inserted, and the like without (1) having to remove an installed chassis from a rack or cabinet, or (2) remove the backplane from a chassis.

While we have shown and described specific embodiments of the present invention, further modifications and improvements will occur to those skilled in the art. It is therefore, to be understood that appended claims are intended to cover all such modifications and changes as fall within the true spirit and scope of the invention.

## Claims

1. A VME multi-service platform system (100) **characterized by**:
a payload module (106) having a first switched fabric connector (210) in a P0 mechanical envelope;
a backplane (204) coupled to receive the payload module, wherein the backplane comprises a corresponding first switched fabric connector in a J0 mechanical envelope coupled to interface with the first switched fabric connector;
a payload module keying mechanism (222) in the P0 mechanical envelope of the payload module that uniquely corresponds to a first switched fabric network standard; and
a corresponding payload module keying mechanism (224) in the J0 mechanical envelope of the backplane that uniquely corresponds to the first switched fabric network standard, and wherein the payload module keying mechanism and the corresponding payload module keying mechanism interconnect only when the payload module keying mechanism and the corresponding payload module keying mechanism both correspond to the first switched fabric network standard.

2. The VME multi-service platform system of claim 1, further **characterized by** a plurality of switched fabric network standards, wherein the first switched fabric connector is compatible with any of the plurality of switched fabric network standards.

3. A payload module (106) coupled to operate within a VME multi-service platform system chassis having a VMEbus network and a switched fabric network that operate concurrently **characterized by**:
the payload module having a first switched fabric connector (210) in a P0 mechanical envelope; and
a payload module keying mechanism (222) in the P0 mechanical envelope of the payload module that uniquely corresponds to a first switched fabric network standard.

4. The payload module of claim 3, wherein the first switched fabric connector is compatible with any of a plurality of switched fabric network standards.

5. A VME multi-service platform system chassis, **characterized by**:
a backplane (204) coupled to receive a payload module, wherein the payload module has a first switched fabric connector in a P0 mechanical envelope and a payload module keying mechanism in the P0 mechanical envelope that uniquely corresponds to a first switched fabric network standard, and wherein the backplane comprises a corresponding first switched fabric connector in a J0 mechanical envelope coupled to interface with the first switched fabric connector; and
a corresponding payload module keying mechanism (224) in the J0 mechanical envelope of the backplane that uniquely corresponds to the first switched fabric network standard, and wherein the payload module keying mechanism and the corresponding payload module keying mechanism interconnect only when the payload module keying mechanism and the corresponding payload module keying mechanism both correspond to the first switched fabric network standard.

6. The VME multi-service platform system chassis of claim 5, wherein the first switched fabric connector and the corresponding first switched fabric connector interconnect only when the payload module keying mechanism and the corresponding payload module keying mechanism both correspond to the first switched fabric network standard.

7. A VME multi-service platform system **characterized by**:
a payload module having a payload module keying mechanism in a P0 mechanical envelope;
a backplane coupled to receive the payload module, wherein the backplane comprises a corresponding payload module keying mechanism in a J0 mechanical envelope coupled to interface with the payload module keying mechanism.

8. The VME multi-service platform system of claim 7, wherein the payload module keying mechanism comprises an alignment portion and a coding key portion, wherein the corresponding payload module keying mechanism comprises a corresponding alignment portion and a corresponding coding key portion.

9. A payload module coupled to operate within a VME multi-service platform system chassis having a VMEbus network and a switched fabric network that operate concurrently **characterized by**:
an alignment portion in a P0 mechanical envelope; and
a coding key portion in the P0 mechanical envelope.

10. The payload module of claim 26, wherein the alignment portion interconnects with a corresponding alignment portion only when the alignment portion and the corresponding alignment portion both correspond to at least one of a first physical type of the first switched fabric connector, a first physical location of the payload module keying mechanism and the corresponding payload module keying mechanism, a first user I/O, a first interconnect topology and a first operating power means.
